# EUROPEAN PATENT APPLICATION

(11) **EP 4 440 062 A1**
(43) Date of publication of application: **02.10.2024**
(21) Application number: 22903164.6
(22) Date of filing: 17.11.2022
(51) Int. Cl.: H04L 41/082

(54) **VIRTUAL SWITCH UPGRADING METHOD AND DEVICE, ELECTRONIC DEVICE AND STORAGE MEDIUM**

(30) Priority: 07.12.2021 CN 202111486398
(71) Applicant: ZTE Corporation, Shenzhen, Guangdong 518057 (CN)
(72) Inventor: XU, Binbin, Shenzhen, Guangdong 518057 (CN)
(74) Representative: Osterhoff, Utz
(86) International application number: PCT/CN2022/132687
(87) International publication number: WO 2023/103741

(57) **Abstract**

Disclosed are a method for upgrading a virtual switch, an apparatus, an electronic device and a storage medium. The method for upgrading the virtual switch includes: creating and initializing a new-version virtual switch in a process of a service forwarding work performed by an old-version virtual switch; freezing the service forwarding work of the old-version virtual switch, and migrating virtual machine information in the old-version virtual switch to the new-version virtual switch; the virtual machine information includes information configured for network communication by a virtual machine connected to the old-version virtual switch; and switching the service forwarding work to the new-version virtual switch for execution based on the virtual machine information migrated to the new-version virtual switch and network cards previously migrated from the old-version virtual switch to the new-version virtual switch.

## Description

### CROSS-REFERENCE TO RELATED APPLICATIONS

The present application claims priority to Chinese patent application No. 202111486398.0, and filed on December 7, 2021, the entire contents of which are incorporated herein by reference.

### TECHNICAL FIELD

The present application relates to the technical field of communication, and in particular to a method for upgrading a virtual switch, an apparatus, an electronic device and a computer-readable storage medium.

### BACKGROUND

The current telecom 5G core network service uses a virtual machine virtualized by a general-purpose server as a service carrier. The internal virtual machine of the general-purpose server carrying the telecom 5G service and the virtual machine of the cross-general-purpose server need to use user-mode virtual switches based on the openvswitch-datapath develop kit (OVS-DPDK) architecture to realize service interconnection between virtual machines. In addition, in commercial scenarios, general-purpose servers generally enable the link aggregation control protocol (LACP) to monitor the link quality with the uplink hardware switch. The state machine of the LACP protocol on the general-purpose server side also needs to be maintained by the virtual switch to ensure that the service of the external link of the general-purpose server can be reached in two directions. It can be seen that the stability of the virtual switch can ensure the reliability of the upper-layer service interaction. Therefore, the importance of the virtual switch as a bridge for virtual machine service interaction is particularly prominent.

However, the virtual switch program implemented by software inevitably needs to be repaired or version upgraded. In the process of fault modification or version upgrade, the virtual switch process needs to be restarted, and the process used for upper-layer service forwarding will also exit synchronously, so that the upper layer service interaction link is unreachable. During the upgrade phase of the virtual switch, services between virtual machines cannot communicate with each other, which may have a relatively large negative impact on services.

### SUMMARY

The purpose of the embodiments of the present application is to provide a method for upgrading a virtual switch, an apparatus, an electronic device and a computer-readable storage medium, so as to shorten the service suspension time during the virtual switch upgrade process and ensure uninterrupted services as much as possible.

In order to achieve the above purpose, the embodiment of the present application provides a method for upgrading a virtual switch, including: creating and initializing a new-version virtual switch in a process of a service forwarding work performed by an old-version virtual switch; freezing the service forwarding work of the old-version virtual switch, and migrating virtual machine information in the old-version virtual switch to the new-version virtual switch; the virtual machine information includes information configured for network communication by a virtual machine connected to the old-version virtual switch; and switching the service forwarding work to the new-version virtual switch for execution based on the virtual machine information migrated to the new-version virtual switch and network cards previously migrated from the old-version virtual switch to the new-version virtual switch.

In order to achieve the above purpose, the embodiment of the present application also provides an apparatus for upgrading a virtual switch; the apparatus for upgrading the virtual switch is deployed on a physical machine, and a virtual machine and an old-version virtual switch connected to the virtual machine are also deployed on the physical machine; the apparatus for upgrading the virtual switch includes: a deployment module configured to create and initialize a new-version virtual switch in a process of a service forwarding work performed by an old-version virtual switch; a network card migration module configured to migrate network cards in the old-version virtual switch to the new-version virtual switch; a virtual machine information migration module configured to freeze the service forwarding work of the old-version virtual switch, and migrate virtual machine information in the old-version virtual switch to the new-version virtual switch after an initialization of the new-version virtual switch is completed; and a switching module configured to switch the service forwarding work to the new-version virtual switch for execution based on the virtual machine information migrated to the new-version virtual switch and network cards previously migrated from the old-version virtual switch to the new-version virtual switch.

The embodiment of the present application also provides an electronic device, including: at least one processor; and a memory communicatively connected to the at least one processor; the at least one processor is configured to run a virtual machine and an old-version virtual switch connected to the virtual machine; the memory stores instructions executable by the at least one processor, and the instructions are executed by the at least one processor, so that the at least one processor executes the method for upgrading the virtual switch.

The embodiment of the present application also provides a computer-readable storage medium storing a computer program, and when the computer program is executed by a processor, the above method for upgrading the virtual switch is realized.

### BRIEF DESCRIPTION OF THE DRAWINGS

One or more embodiments are exemplified by the pictures in the corresponding drawings, and these exemplifications do not constitute a limitation to the embodiments. Elements with the same reference numerals in the drawings represent similar elements. Unless otherwise stated, the pictures in the corresponding drawings are not limited to scale.
FIG. 1 is a flowchart of a method for upgrading a virtual switch according to an embodiment of the present application.
FIG. 2 is a flowchart of the method for upgrading the virtual switch according to another embodiment of the present application.
FIG. 3 is a schematic diagram of a migration scenario of an aggregation group member network card according to an embodiment of the present application.
FIG. 4 is a schematic structural diagram of an apparatus for upgrading a virtual switch according to an embodiment of the present application.
FIG. 5 is a schematic structural diagram of an electronic device according to another embodiment of the present application.

### DETAILED DESCRIPTION OF THE EMBODIMENTS

In order to make the objectives, technical solutions and advantages of the embodiments of the present application clearer, the various embodiments of the present application will be described in detail below with reference to the accompanying drawings. However, those skilled in the art can understand that, in each embodiment of the present application, many technical details are provided for readers to better understand the present application. However, even without these technical details and various changes and modifications based on the following embodiments, the technical solution claimed in the present application can also be realized. The division of the following embodiments is for the convenience of description, and should not constitute any limitation to the specific embodiments of the present application, and the embodiments can be combined and referenced to each other on the premise of no contradiction.

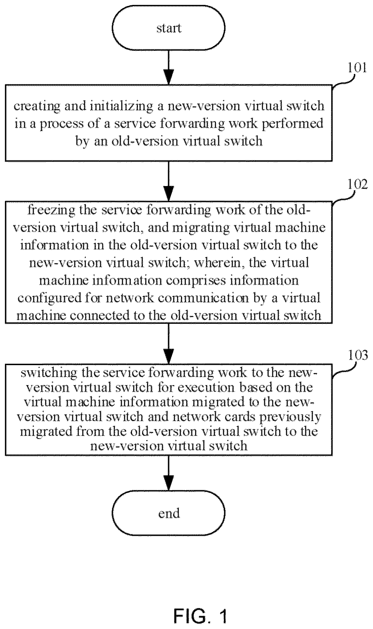

An embodiment of the present application relates to a method for upgrading a virtual switch. In this embodiment, creating and initializing a new-version virtual switch in a process of a service forwarding work performed by an old-version virtual switch; freezing the service forwarding work of the old-version virtual switch, and migrating virtual machine information in the old-version virtual switch to the new-version virtual switch; the virtual machine information includes information configured for network communication by a virtual machine connected to the old-version virtual switch; and switching the service forwarding work to the new-version virtual switch for execution based on the virtual machine information migrated to the new-version virtual switch and network cards previously migrated from the old-version virtual switch to the new-version virtual switch. The specific flow of the method for upgrading the virtual switch in this embodiment may be shown in FIG. 1.

For service interaction between virtual machines in user mode, the datapath of the virtual switch needs to receive messages from physical network cards or virtual machine ports, parse the messages, and modify and forward the messages according to the flow table saved in the datapath. Finally, the service interconnection function between virtual machines is realized. As datapath is a part of the virtual switch, when the virtual switch is restarted due to fault repair or version upgrade, the datapath running as a thread will also quit working with the exit of the virtual switch process, which means that during the virtual switch restart phase , the receiving, parsing, processing, and forwarding of service messages are suspended, and services between virtual machines cannot communicate with each other.

The startup process of the new-version virtual switch involves a series of tasks such as the huge page memory initialization of the datapath develop kit (DPDK), physical network card initialization, physical network card LACP negotiation, and OpenFlow flow rule initialization. The initialization of these resources and the LACP link negotiation process take a lot of time, which greatly lengthens the service recovery time between virtual machines. In view of the above problems, the present application proposes a method for upgrading a virtual switch to shorten the service suspension time during the virtual switch upgrade process and ensure uninterrupted services as much as possible. The method for upgrading the virtual switch involved in this embodiment can be used in large-scale virtualized commercial networks such as 5G core network elements of mobile operators.

The embodiment details of the method for upgrading the virtual switch in this embodiment will be described in detail below. The following content is only for the convenience of understanding the embodiment details of the solution, and is not necessary for implementing the solution. The specific process is shown in FIG. 1, and may include the following steps:
Step 101, creating and initializing a new-version virtual switch in a process of a service forwarding work performed by an old-version virtual switch.

In this step, the new-version virtual switch can be created and initialized without interrupting its normal operation while the old-version virtual switch is performing service forwarding work. The initialization of the new-version virtual switch includes initializing the DPDK huge page memory, backing up the open flow rules, and preparing related resources for the new-version virtual switch for forwarding. Initializing the new-version virtual switch may also include initializing shared memory for storing virtual machine information. In actual embodiment, after the initialization process of the new-version virtual switch is completed, the part of the apparatus for upgrading the virtual switch deployed in the new-version virtual switch may send an initialization completion notification.

In an example, in the process of performing service forwarding by the old-version virtual switch, a new-version virtual switch is created and initialized in response to a virtual switch upgrade instruction. The virtual switch upgrade instruction may be generated according to the situation that the virtual switch needs to perform fault repair or version upgrade.

Step 102, freezing the service forwarding work of the old-version virtual switch, and migrating virtual machine information in the old-version virtual switch to the new-version virtual switch; the virtual machine information includes information configured for network communication by a virtual machine connected to the old-version virtual switch.

In an example, step 102 may include: after freezing the service forwarding work of the old-version virtual switch, the old-version virtual switch writes the virtual machine information in the old-version virtual switch to a preset shared memory, and the new-version virtual switch reads the virtual machine information from the shared memory. In this example, shared memory is configured to migrate virtual machine information.

In another example, after step 102, the network card in the old-version virtual switch can also be migrated to the new-version virtual switch. The network card migration involved in this example may be implemented by the part of the apparatus for upgrading the virtual switch deployed in the new-version virtual switch to send a network card migration completion notification.

Step 103, switching the service forwarding work to the new-version virtual switch for execution based on the virtual machine information migrated to the new-version virtual switch and network cards previously migrated from the old-version virtual switch to the new-version virtual switch.

In this step, after the virtual machine information and network card are migrated to the new-version virtual switch, the unit of the apparatus for upgrading the virtual switch deployed in the new-version virtual switch can rebuild the virtual sending and receiving queue and reconnect the front-end and back-end links between the quick emulator (QEMU), so that the service forwarding work can be switched to the new-version virtual switch for execution. After the communication link including the new-version virtual switch is rebuilt, the unit of the apparatus for upgrading the virtual switch deployed in the new-version virtual switch may send a reconstruction end message to the old-version virtual switch, so as to trigger the exit process of the old-version virtual switch.

It is worth mentioning that the method for upgrading the virtual switch involved in this embodiment has no correlation with the version before and after the upgrade, that is, no matter what service function changes or upgrades the new-version virtual switch performs, it can realize uninterrupted service during the virtual switch upgrade stage.

In this embodiment, when the old-version virtual switch performs service forwarding, the new-version virtual switch can be created and initialized without interrupting services. Then the service forwarding work of the old-version virtual switch is frozen, and the virtual machine information in the old-version virtual switch is migrated to the new-version virtual switch. The virtual machine information includes the information used for network communication by the virtual machine connected to the old-version virtual switch, so that the new-version virtual switch can obtain information required for network communication. Then, based on the migrated virtual machine information and the network card migrated from the old-version virtual switch to the new-version virtual switch in advance, the service forwarding work is switched to the new-version virtual switch for execution. Compared with the upgrade method of stopping forwarding during the whole upgrade process of the virtual switch, the service suspension time can be greatly shortened, and the service is not interrupted as much as possible.

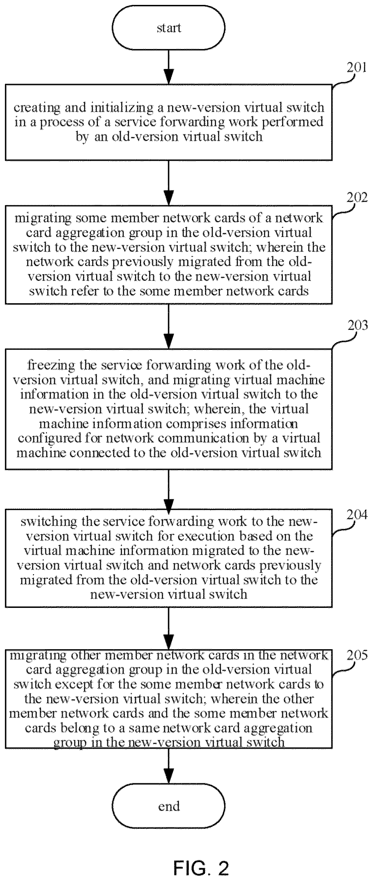

Another embodiment of the present application relates to a method for upgrading a virtual switch. In this embodiment, creating and initializing a new-version virtual switch in a process of a service forwarding work performed by an old-version virtual switch; freezing the service forwarding work of the old-version virtual switch, and migrating virtual machine information in the old-version virtual switch to the new-version virtual switch; the virtual machine information includes information configured for network communication by a virtual machine connected to the old-version virtual switch; and switching the service forwarding work to the new-version virtual switch for execution based on the virtual machine information migrated to the new-version virtual switch and network cards previously migrated from the old-version virtual switch to the new-version virtual switch. The specific flow of the method for upgrading the virtual switch in this embodiment may be shown in FIG. 2.

The embodiment details of the method for upgrading the virtual switch in this embodiment will be described in detail below. The following content is only for the convenience of understanding the embodiment details of the solution, and is not necessary for implementing the solution. The specific process is shown in FIG. 2, and may include the following steps:
Step 201, creating and initializing a new-version virtual switch in a process of a service forwarding work performed by an old-version virtual switch.
Step 202, migrating some member network cards of a network card aggregation group in the old-version virtual switch to the new-version virtual switch; the network cards previously migrated from the old-version virtual switch to the new-version virtual switch refer to the some member network cards.

The duration of freezing the service forwarding work of the old-version virtual switch determines the length of service delay caused by the upgrade of the virtual switch. Therefore, in this step, the network card aggregation group is dynamically adjusted. There is no need to migrate the network card during the period when the service is suspended and forwarded, which can shorten the service freezing time of the old-version virtual switch, that is, reduce the delay of service forwarding caused by the upgrade.

In an example, the network card migration involved in step 202 may migrate a member network card in the network card aggregation group in the old-version virtual switch to the new-version virtual switch. If the network card aggregation group in the old-version virtual switch includes multiple network cards, one of the member network cards can be migrated first.
Step 203, freezing the service forwarding work of the old-version virtual switch, and migrating virtual machine information in the old-version virtual switch to the new-version virtual switch; the virtual machine information includes information configured for network communication by a virtual machine connected to the old-version virtual switch;
Step 204, switching the service forwarding work to the new-version virtual switch for execution based on the virtual machine information migrated to the new-version virtual switch and network cards previously migrated from the old-version virtual switch to the new-version virtual switch.

In one example, step 204 may include: recovering virtual machine communication according to the virtual machine information; the recovery of virtual machine communication includes rebuilding the message sending and receiving queue of the virtual machine and reconnecting the link between the new-version virtual switch and the virtual machine; after the locked state of some member network cards and uplink switch ports is released and the virtual machine communication is restored, the new-version virtual switch performs service forwarding. In this example, the reconstruction of the sending and receiving queue for communication between virtual machines and the link reconnection between the new-version virtual switch and the virtual machines can enable the new-version virtual switch to perform service forwarding work smoothly in the future.

Those skilled in the art can understand that, in addition to performing related work of the link reconnection after the freezing time in this example, the related work of the link reconnection can also be performed during the freezing time.

In another example, step 202 may include: releasing some member network cards in the network card aggregation group in the old-version virtual switch, and adding some member network cards released by the old-version virtual switch to the new-version virtual switch; Some member network cards in the network are connected to the ports of the uplink switch, and some member network cards and the ports of the uplink switch are set to the locked state. The steps in this example are performed before the freezing time, which can further shorten the time, that is, shorten the suspension time of service forwarding.

In actual embodiment, after the step of releasing some member network cards in the network card aggregation group in the old-version virtual switch involved in this example is completed, the part of the apparatus for upgrading the virtual switch deployed in the old-version virtual sends the network card release notification, so that the new-version virtual switch can add this network card.

In this example, step 204 involves the step of switching the service forwarding work to the new-version virtual switch based on the virtual machine information migrated to the new-version virtual switch and the network card migrated from the old-version virtual switch to the new-version virtual switch in advance, and it may include: releasing the locked state of some member network cards and uplink switch ports.

In this example, the establishment of connections between some member network cards added to the new-version virtual switch and the port of the uplink switch may include: specifying the identification marks of some member network cards added to the new-version virtual switch as: the identification marks of some member network card in the old-version virtual switch are the same; based on the specified identification marks, some member network cards in the new-version virtual switch are connected to the ports of the uplink switch. It can avoid the upgrade perception of the virtual switch by the peer hardware switch device.

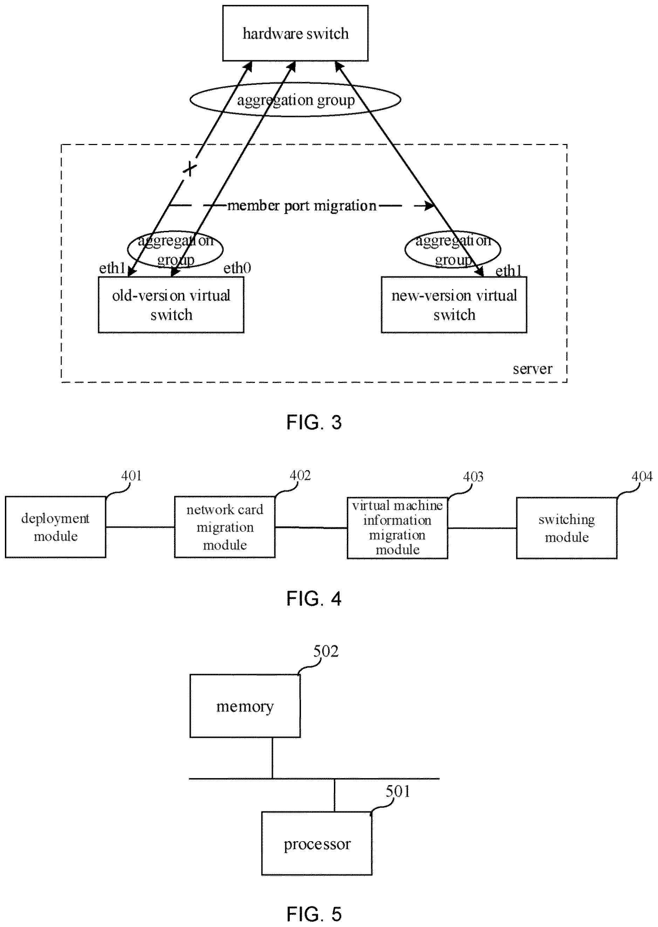

FIG. 3 shows the migration scenario of the aggregation group member network cards involved in this example. When the old-version virtual switch process is working normally, the hardware network cards eth0 and eth1 on the server are added to the aggregation group, and the LACP protocol is configured to maintain the protocol status of the aggregation group member network cards with the ports of the uplink hardware switch to ensure the normal forwarding of incoming and outgoing services from the server. When member network card ports of the aggregation group are migrated, first the aggregation group member network card eht1 of the old-version virtual switch process is exited, and the eth1 is added to the aggregation group of the new virtual switch process. Furthermore, by specifying the identification mark system-id of the member network cards of the aggregation group of the new-version virtual switch process, the peer hardware switch can normally perform LACP negotiation with the new-version virtual switch, that is, service interconnection. Both the control network card eth1 and the uplink hardware switch ports are locked. When the virtual machine information migration step is performed, the LACP state transition process is started synchronously, that is, the forwarding link between the new-version virtual switch process and the uplink switch is opened through the migrated member network card eth1. After the virtual machine information migration step is completed, and after the original virtual switch releases the member network card eth0 under the corresponding aggregation group, eth0 is dynamically added to the aggregation group of the new-version virtual switch process, and the upgrade and switching process of the entire hardware network card device is completed.

Step 205, migrating other member network cards in the network card aggregation group in the old-version virtual switch except for the some member network cards to the new-version virtual switch; the other member network cards and the some member network cards belong to a same network card aggregation group in the new-version virtual switch.

In this step, you can first release the other member network cards in the network card aggregation group in the old-version virtual switch except some member network cards, and then send the network card release notification by the part of the apparatus for upgrading the virtual switch deployed in the old-version virtual switch, and then you can exit the old-version virtual switch. After the old-version virtual switch exits, the new-version virtual switch completes the addition of other member network cards of the network card aggregation group, that is, the virtual switch upgrade process is completed.

It is not difficult to see that step 201, step 203, and step 204 in this embodiment are the same as those in the previous embodiment. The relevant technical details mentioned in the previous embodiment are still valid in this embodiment. In order to reduce repetition, no more details will be given in this embodiment.

In this embodiment, when the old-version virtual switch performs service forwarding, the new-version virtual switch can be created and initialized without interrupting services. Some member network cards in the network card aggregation group in the old-version virtual switch are migrated to the new-version virtual switch, thereby freezing the service forwarding work of the old-version virtual switch, and the virtual machine information in the old-version virtual switch is migrated to the new-version virtual switch, which can make the new-version virtual switch obtain the information required for network communication. Then, based on the migrated virtual machine information and the network card migrated from the old-version virtual switch to the new-version virtual switch in advance, the service forwarding work is switched to the new-version virtual switch for execution. Then other member network cards in the old-version virtual switch are migrated. This embodiment mode does not need to suspend the service of the virtual switch during the creation and initialization stages of the new-version virtual switch and the migration of the network card. Compared with the upgrade method of stopping forwarding during the entire upgrade process of the virtual switch, the service suspension time can be greatly shortened to achieve uninterrupted services as much as possible, which can improve the robustness and reliability of the current 5G service network.

An embodiment of the present application relates to an apparatus for upgrading a virtual switch, as shown in FIG. 4. The apparatus for upgrading the virtual switch is deployed on a physical machine (not shown in the figure), and a virtual machine (not shown in the figure) and an old-version virtual switch (not shown in the figure) connected to the virtual machine are also deployed on the physical machine; the apparatus for upgrading the virtual switch includes:
A deployment module 401, configured to create and initialize a new-version virtual switch in a process of a service forwarding work performed by an old-version virtual switch;
A network card migration module 402, configured to migrate network cards in the old-version virtual switch to the new-version virtual switch;
A virtual machine information migration module 403, configured to freeze the service forwarding work of the old-version virtual switch, and migrate virtual machine information in the old-version virtual switch to the new-version virtual switch after an initialization of the new-version virtual switch is completed; and
A switching module 404, configured to switch the service forwarding work to the new-version virtual switch for execution based on the virtual machine information migrated to the new-version virtual switch and network cards previously migrated from the old-version virtual switch to the new-version virtual switch.

It is worth mentioning that the modules mentioned above can be divided into multiple parts or units that are deployed independently or deployed in an old-version virtual switch to implement the same function. For example, the virtual machine information migration module 403 may have a part deployed separately in the physical machine, which is configured to freeze the service forwarding work of the old-version virtual switch; meanwhile there is a part deployed in the old-version virtual switch, which is configured to migrate the virtual machine information in the old-version virtual switch to the new-version virtual switch. The above multiple units deployed in the physical machine and the virtual switch together form the virtual machine information migration module 403.

In an example, the network card migration module 402 can also be configured to migrate some member network cards in the network card aggregation group in the old-version virtual switch to the new version after creating and initializing the new-version virtual switch and before freezing the service forwarding work of the old-version virtual switch; the network cards that are migrated from the old-version virtual switch to the new-version virtual switch in advance refer to some member network cards; the network card migration module 402 can also be configured to migrate other member network cards in the network card aggregation group in the old-version virtual switch except for the some member network cards to the new-version virtual switch, based on the virtual machine information migrated to the new-version virtual switch and network cards previously migrated from the old-version virtual switch to the new-version virtual switch, and after switching the service forwarding work to the new-version virtual switch for execution; the other member network cards and the some member network cards belong to a same network card aggregation group in the new-version virtual switch.

In an example, the network card migration module 402 can also be configured to release some member network cards in the network card aggregation group in the old-version virtual switch, and add some member network cards released by the old-version virtual switch to the new-version virtual switch. Some member network cards in the new-version virtual switch are connected to the ports of the uplink switch, and some member network cards and the ports of the uplink switch are set to a locked state; in this example, the switching module 404 can also be configured to release the locked state between some member network cards and the ports of the uplink switch.

In one example, the switching module 404 can also be configured to restore the virtual machine communication according to the virtual machine information; the restoration of the virtual machine communication includes rebuilding the message sending and receiving queue of the virtual machine and reconnecting link between the new-version virtual switch and the virtual machine; after the locked state of some member network cards and uplink switch ports is released and the virtual machine communication is restored, the new-version virtual switch performs service forwarding.

In an example, the network card migration module 402 can also be configured to specify the identification mark of some member network cards added to the new-version virtual switch as: the same as the identification mark of some member network cards in the old-version virtual switch; based on the specified identification mark, some member network cards in the new-version virtual switch are connected to the ports of the uplink switch.

In an example, the network card migration module 402 may also be configured to migrate a member network card in the network card aggregation group in the old-version virtual switch to the new-version virtual switch.

In another example, the network card migration module 402 can also be configured to migrate the network card in the old-version virtual switch to the new-version virtual switch, after freezing the service forwarding work of the old-version virtual switch, and before switching the service forwarding work to the new-version virtual switch, based on the virtual machine information migrated to the new-version virtual switch and the network card migrated from the old-version virtual switch to the new-version virtual switch in advance.

In another example, the virtual machine information migration module 403 can also be configured to write the virtual machine information in the old-version virtual switch into the preset shared memory after freezing the service forwarding work of the old-version virtual switch, and the new-version virtual switch reads the virtual machine information from the shared memory.

In another example, the deployment module 401 may also be configured to create and initialize a new-version virtual switch in response to a virtual switch upgrade instruction during the process of performing service forwarding by the old-version virtual switch.

The apparatus for upgrading the virtual switch provided in this embodiment can create and initialize a new-version virtual switch without interrupting services during the process of performing service forwarding by the old-version virtual switch. Then the service forwarding work of the old-version virtual switch is frozen, and the virtual machine information in the old-version virtual switch is migrated to the new-version virtual switch. The virtual machine information includes the information used for network communication by the virtual machine connected to the old-version virtual switch, so that the new-version virtual switch can obtain information required for network communication. Then, based on the migrated virtual machine information and the network card migrated from the old-version virtual switch to the new-version virtual switch in advance, the service forwarding work is switched to the new-version virtual switch for execution. Compared with the upgrade method of stopping forwarding during the whole upgrade process of the virtual switch, the service suspension time can be greatly shortened, and the service is not interrupted as much as possible.

It is worth mentioning that all the modules involved in the above embodiments of the present application are logical modules. In practical applications, a logical unit can be a physical unit, or a part of a physical unit, and can also combination of physical units. In addition, in order to highlight the innovative part of the present application, units that are not closely related to solving the technical problems proposed in the present application are not introduced in this embodiment, but this does not mean that there are no other units in this embodiment.

The embodiment of the present application also provides an apparatus for upgrading a virtual switch, as shown in FIG. 5, including at least one processor 501; and a memory 502 communicatively connected to the at least one processor 501; the at least one processor 501 is configured to run a virtual machine and an old-version virtual switch connected to the virtual machine; the memory 502 stores instructions executable by the at least one processor 501, and the instructions are executed by the at least one processor 501, so that the at least one processor 501 executes the method for upgrading the virtual switch.

The memory 502 and the processor 501 are connected by a bus, and the bus may include any number of interconnected buses and bridges; the bus connects one or more processors 501 and various circuits of the memory 502 together. The bus may also connect together various other circuits such as peripherals, voltage regulators, and power management circuits, all of which are well known in the art and therefore will not be further described herein. The bus interface provides an interface between the bus and the transceivers. A transceiver may be a single element or multiple elements, such as multiple receivers and transmitters, providing means for communication with various other devices over a transmission medium. The data processed by the processor 501 is transmitted on the wireless medium through the antenna, and further, the antenna also receives the data and transmits the data to the processor 501.

Processor 501 is responsible for managing the bus and general processing, and may also provide various functions including timing, peripheral interface, voltage regulation, power management and other control functions. Instead, the memory 502 may be configured to store data used by the processor 501 when performing operations. The apparatus for upgrading the virtual switch involved in the previous embodiment may also be deployed in the electronic device involved in this embodiment.

The above-mentioned products can execute the method provided in the embodiment of the present application, and have corresponding functional modules and beneficial effects for executing the method. For technical details not described in detail in this embodiment, please referring to the method provided in the embodiment of the present application.

Embodiments of the present application also provide a computer-readable storage medium storing a computer program. When the computer program is executed by the processor, the above method for upgrading the virtual switch is realized. The apparatus for upgrading the virtual switch involved in the foregoing embodiments may also be deployed in the computer-readable storage medium involved in this embodiment.

Those skilled in the art can understand that all or part of the steps in the method of the above-mentioned embodiments can be completed by instructing related hardware through a program; the program is stored in a storage medium, and includes several instructions to make a device (which can be a single chip microcomputer, a chip, etc.) or a processor executes all or part of the steps of the methods described in the various embodiments of the present application. The aforementioned storage media includes: U disk, mobile hard disk, read-only memory (ROM), random access memory (RAM), magnetic disk or optical disc, etc., which can store program codes.

The above-mentioned embodiments are provided for those skilled in the art to implement and use the present application. Those skilled in the art can make various modifications or changes to the above-mentioned embodiments without departing from the inventive idea of the present application. Therefore, the scope of protection of the present application is not limited by the above-mentioned embodiments, but should conform to the maximum scope of the innovative features mentioned in the claims.

## Claims

1. A method for upgrading a virtual switch, **characterized by** comprising:
creating and initializing a new-version virtual switch in a process of a service forwarding work performed by an old-version virtual switch;
freezing the service forwarding work of the old-version virtual switch, and migrating virtual machine information in the old-version virtual switch to the new-version virtual switch; wherein, the virtual machine information comprises information configured for network communication by a virtual machine connected to the old-version virtual switch; and
switching the service forwarding work to the new-version virtual switch for execution based on the virtual machine information migrated to the new-version virtual switch and network cards previously migrated from the old-version virtual switch to the new-version virtual switch.

2. The method for upgrading the virtual switch according to claim 1, wherein after the creating and initializing the new-version virtual switch and before the freezing the service forwarding work of the old-version virtual switch, the method further comprises:
migrating some member network cards of a network card aggregation group in the old-version virtual switch to the new-version virtual switch; wherein the network cards previously migrated from the old-version virtual switch to the new-version virtual switch refer to the some member network cards; and
the switching the service forwarding work to the new-version virtual switch for execution based on the virtual machine information migrated to the new-version virtual switch and network cards previously migrated from the old-version virtual switch to the new-version virtual switch further comprises:
migrating other member network cards in the network card aggregation group in the old-version virtual switch except for the some member network cards to the new-version virtual switch; wherein the other member network cards and the some member network cards belong to a same network card aggregation group in the new-version virtual switch.

3. The method for upgrading the virtual switch according to claim 2, wherein the migrating the some member network cards of the network card aggregation group in the old-version virtual switch to the new-version virtual switch further comprises:
releasing some member network cards in the network card aggregation group in the old-version virtual switch, and adding the some member network cards released by the old-version virtual switch to the new-version virtual switch;
establishing a connection between the some member network cards added to the new-version virtual switch and a port of an uplink switch, and setting the some member network cards and the port of the uplink switch to a locked state; and
the switching the service forwarding work to the new-version virtual switch for execution based on the virtual machine information migrated to the new-version virtual switch and the network cards previously migrated from the old-version virtual switch to the new-version virtual switch further comprises:
releasing the locked state of the some member network cards and the port of the uplink switch.

4. The method for upgrading the virtual switch according to claim 3, wherein the switching the service forwarding work to the new-version virtual switch for execution based on the virtual machine information migrated to the new-version virtual switch and the network cards previously migrated from the old-version virtual switch to the new-version virtual switch further comprises:
restoring a virtual machine communication according to the virtual machine information;
wherein the restoration of the virtual machine communication comprises rebuilding a message sending and receiving queue of the virtual machine and reconnecting a link between the new-version virtual switch and the virtual machine; and
wherein after the locked state of the some member network cards and the port of the uplink switch are released and the virtual machine communication is restored, the new-version virtual switch is configured to perform the service forwarding work.

5. The method for upgrading a virtual switch according to claim 3, wherein the establishing the connection between the some member network cards added to the new-version virtual switch and the port of the uplink switch further comprises:
specifying identification marks of the some member network cards added to the new-version virtual switch to be: the same as identification marks of the some member network cards in the old-version virtual switch; and
establishing the connection between the some member network cards in the new-version virtual switch and the port of the uplink switch based on designated identification marks.

6. The method for upgrading the virtual switch according to claim 2, wherein the migrating the some member network cards of the network card aggregation group in the old-version virtual switch to the new-version virtual switch further comprises:
migrating one member network card in the network card aggregation group in the old-version virtual switch to the new-version virtual switch.

7. The method for upgrading the virtual switch according to claim 1, wherein after the freezing the service forwarding work of the old-version virtual switch, and before the switching the service forwarding work to the new-version virtual switch for execution based on the virtual machine information migrated to the new-version virtual switch and the network cards previously migrated from the old-version virtual switch to the new-version virtual switch, the method further comprises:
migrating the network card in the old-version virtual switch to the new-version virtual switch.

8. The method for upgrading the virtual switch according to claim 1, wherein the freezing the service forwarding work of the old-version virtual switch, and migrating the virtual machine information in the old-version virtual switch to the new-version virtual switch further comprises:
writing the virtual machine information in the old-version virtual switch into a preset shared memory by the old-version virtual switch after freezing the service forwarding work of the old-version virtual switch; wherein the new-version virtual switch is configured to read the virtual machine information from the shared memory.

9. The method for upgrading the virtual switch according to claim 1, wherein the creating and initializing the new-version virtual switch in the process of the service forwarding work performed by the old-version virtual switch is specifically as follows:
in response to a virtual switch upgrade instruction, creating and initializing the new-version virtual switch in the process of the service forwarding work performed by the old-version virtual switch.

10. An apparatus for upgrading a virtual switch, wherein the apparatus for upgrading the virtual switch is deployed on a physical machine, and a virtual machine and an old-version virtual switch connected to the virtual machine are also deployed on the physical machine; **characterized in that** the apparatus for upgrading the virtual switch comprises:
a deployment module configured to create and initialize a new-version virtual switch in a process of a service forwarding work performed by an old-version virtual switch;
a network card migration module configured to migrate network cards in the old-version virtual switch to the new-version virtual switch;
a virtual machine information migration module configured to freeze the service forwarding work of the old-version virtual switch, and migrate virtual machine information in the old-version virtual switch to the new-version virtual switch after an initialization of the new-version virtual switch is completed; and
a switching module configured to switch the service forwarding work to the new-version virtual switch for execution based on the virtual machine information migrated to the new-version virtual switch and network cards previously migrated from the old-version virtual switch to the new-version virtual switch.

11. An electronic device, **characterized by** comprising:
at least one processor; and
a memory communicatively connected to the at least one processor;
wherein, the at least one processor is configured to run a virtual machine and an old-version virtual switch connected to the virtual machine; the memory stores instructions executable by the at least one processor, and the instructions are executed by the at least one processor, so that the at least one processor executes the method for upgrading the virtual switch according to any one of claims 1 to 9.

12. A computer-readable storage medium, storing a computer program, **characterized in that** when the computer program is executed by a processor, the method for upgrading the virtual switch according to any one of claims 1 to 9 is realized.
